# EUROPÄISCHE PATENTANMELDUNG

(11) **EP 2 423 887 A1**
(43) Veröffentlichungstag der Anmeldung: **29.02.2012**
(21) Anmeldenummer: 10174198.1
(22) Anmeldetag: 26.08.2010
(51) Int. Cl.: G07C 5/08, G01M 15/02

(54) **Portable Vorrichtung zur Veränderung von Betriebsparameterwerten und/oder Firmware von elektronischen Steuerungseinrichtungen von Kraftfahrzeugen**

(71) Anmelder: OBD Tuning GmbH, 21147 Hamburg (DE)
(72) Erfinder: Meyer, Sven, 21423 Winsen / Luhe (DE)
(74) Vertreter: UEXKÜLL & STOLBERG

(57) **Zusammenfassung**

Die Erfindung betrifft eine portable Vorrichtung zur Veränderung von Betriebsparameterwerten und/oder Firmware von an einen Kommunikationsbus angeschlossenen elektronischen Steuerungseinrichtungen von Kraftfahrzeugen und ein entsprechendes Verfahren unter Verwendung der Vorrichtung. Die Vorrichtung umfasst eine Speichereinrichtung (3, 3'), eine mit dieser verbundene Prozessoreinrichtung (2, 2'), die angepasst ist, um Firmwarekomponenten und/oder Betriebsparameterwerte aus der Speichereinrichtung (3, 3') auszulesen, und eine mit der Prozessoreinrichtung (2, 2') verbundene Schnittstelleneinrichtung (4), die angepasst ist, um mit dem Kommunikationsanschluss des Kommunikationsbusses lösbar zur Ermöglichung einer Datenkommunikation verbunden zu werden. Die Prozessoreinrichtung (2, 2') weist eine Übersetzungseinrichtung (2, 2b) auf, mit deren Hilfe die Prozessoreinrichtung (2, 2') Daten nach einer Vielzahl unterschiedlicher Kommunikationsprotokolle senden, empfangen und interpretieren kann, und ist angepasst, um selbsttätig eine Kommunikationsverbindung über den Kommunikationsbus herzustellen, eine Bestandsaufnahme der Steuerungseinrichtungen und der von ihnen verwendeten Kommunikationsprotokolle durchzuführen und für jede erkannte Steuerungseinrichtung, für die in der Speichereinrichtung (3, 3') Firmwarekomponenten und/oder Betriebsparameterwerte gespeichert sind, über den Kommunikationsbus gemäß dem entsprechenden Kommunikationsprotokoll Programmierbefehle und den jeweiligen Firmwarekomponenten und/oder Betriebsparameterwerten entsprechende Daten an die jeweilige Steuerungseinrichtung zu senden, wobei die Programmierbefehle und Daten angepasst sind, um die Firmwarekomponenten und/oder Betriebsparameterwerte in der jeweiligen Steuerungseinrichtung zu implementieren.

## Beschreibung

Die vorliegende Erfindung betrifft eine portable Vorrichtung zur Veränderung von Betriebsparameterwerten und/oder Firmware von elektronischen Steuerungseinrichtungen von Kraftfahrzeugen gemäß dem Oberbegriff des Anspruchs 1.

Moderne Kraftfahrzeuge weisen in der Regel eine Vielzahl unterschiedlicher elektronischer Steuerungseinrichtungen auf, mit denen verschiedene Funktionseinheiten des Kraftfahrzeugs gesteuert werden und die an einen gemeinsamen Kommunikationsbus angeschlossen sind. Beispiele für derartige Steuerungseinrichtungen sind etwa Motorsteuerungseinrichtungen, Getriebesteuerungseinrichtungen und Bremssystem-Steuerungseinrichtungen, wie z.B. Steuerungseinrichtungen für das ABS-Bremssystem. Die Funktionsweise jeder einzelnen Steuerungseinrichtung wird durch die in ihr jeweils gespeicherte Firmware und ggf. durch in ihr jeweils gespeicherte Betriebsparameter bzw. Werte von Betriebsparametern bestimmt. Dabei kann es aus verschiedenen Gründen wünschenswert oder erforderlich sein, die Firmware und/oder Betriebsparameter bzw. Betriebsparameterwerte zu verändern, beispielsweise um Fehler zu beheben oder eine besser an die vorgesehenen Einsatzbedingungen des Kraftfahrzeugs angepasste Betriebsweise zu erzielen.

In Zusammenhang mit der letzteren Möglichkeit ist zu beachten, dass die meisten Kraftfahrzeuge in unveränderter Form in weiten Bereichen der Welt vertrieben werden, obwohl an verschiedenen Orten ganz verschiedene Umgebungsbedingungen vorherrschen. So werden Kraftfahrzeughersteller, die ihre Produkte in ganz Europa vertreiben, im Allgemeinen dieselben Steuerungseinrichtungen in ihren Kraftfahrzeugen verwenden, unabhängig davon, ob ein Kraftfahrzeug nach Griechenland, Portugal, Finnland oder Schweden geliefert werden soll. Die sehr unterschiedlichen klimatischen und geographischen Verhältnisse in diesen Ländern stellen jedoch sehr unterschiedliche Anforderungen an den Betrieb des Kraftfahrzeugs. Um die Kraftfahrzeuge dennoch in einheitlicher Konfiguration vertreiben zu können, müssen die verschiedenen Steuerungseinrichtungen in der Weise auf einen "Mittelwert" hin konfiguriert bzw. an geeignet definierte Durchschnittsbedingungen angepasst werden, dass ein vernünftiger Betrieb in allen Regionen möglich ist. Aufgrund dieser Anpassung kann das Kraftfahrzeug aber nicht überall optimal betrieben werden, so dass häufig durch gezielte Veränderung der Funktionsweise der einzelnen Steuerungseinrichtungen bessere Ergebnisse erzielbar sind, beispielsweise in Bezug auf den Kraftstoffverbrauch, das Beschleunigungsverhalten oder die Abnutzung des Motors.

Vor diesem Hintergrund und auch aus anderen Gründen, wie z.B. einer gewünschten Änderung der Funktion des Bordkommunikations- oder -unterhaltungssystems, ist es bekannt, die Betriebsparameter und/oder Firmware von elektronischen Steuerungseinrichtungen von Kraftfahrzeugen gezielt zu verändern. Zu diesem Zweck kommen Vorrichtungen zum Einsatz, die entweder allgemeine programmierbare Vorrichtungen, wie z.B. Computer oder Laptops, oder spezialisierte Vorrichtungen umfassen und die an den Kommunikationsbus des betreffenden Kraftfahrzeugs angeschlossen werden. In diesem Zusammenhang ist von Bedeutung, dass moderne Kraftfahrzeuge eine Steckverbindungsschnittstelle aufweisen, über die ein Anschluss externer Geräte an den Kommunikationsbus möglich ist, und dass seit etwa 2001 zumindest in Europa eine einheitliche Steckverbindungsschnittstelle verwendet wird, was bei externen Geräten die Verwendung einheitlicher Stecker für Kraftfahrzeuge verschiedener Hersteller und Typen ermöglicht. Diese einheitliche Steckverbindungsschnittstelle ist als sog. OBD-2-Diagnosebuchse bekannt (OBD steht für "On-Board Diagnose").

Bei derartigen Vorrichtungen ist es für eine Veränderung der Werte von Betriebsparametern und/oder Firmware der elektronischen Steuerungseinrichtungen jedoch notwendig, dass ein Bediener jede Steuerungseinrichtung einzeln anspricht und gezielte, an die jeweilige Steuerungseinrichtung angepasste Bedienungsschritte vornimmt. Dabei müssen zunächst Daten aus der betreffenden Steuerungseinrichtung ausgelesen und angezeigt oder ausgedruckt werden und anschließend neue Daten bestimmt und, häufig manuell, in die Vorrichtung eingegeben werden. Der Bediener kann daher nur gezielt auf eine bestimmte Steuerungseinrichtung zur selben Zeit Einfluss nehmen.

Die Verwendung dieser Vorrichtungen wird ferner dadurch erschwert, dass sich verschiedene Kraftfahrzeuge im Allgemeinen in der Art und dem Typ der Steuerungseinrichtungen unterscheiden und dass verschiedene Steuerungseinrichtungen regelmäßig gemäß unterschiedlichen Kommunikationsprotokollen arbeiten. Daher wird entweder für jede Steuerungseinrichtung eine separate und speziell angepasste Vorrichtung verwendet, oder es kommt eine für mehrere Steuerungseinrichtungen verwendbare Vorrichtung zum Einsatz, deren Software oder Steuerung manuell auf die jeweilige Steuerungseinrichtung eingestellt werden muss.

Vor diesem Hintergrund erfordert die Veränderung der Betriebsparameter bzw. Betriebsparameterwerte und/oder Firmware der elektronischen Steuerungseinrichtungen von Kraftfahrzeugen, in deren Rahmen in kurzen Zeiträumen auf viele verschiedene Steuerungseinrichtungen und verschiedene Kraftfahrzeuge Einfluss genommen werden soll, einen hohen Hard- und Softwareaufwand und einen hohen Zeitaufwand und ist daher mit hohen Kosten verbunden. Wünscht der Inhaber eines Kraftfahrzeugs eine Veränderung, so übertragen sich die Kosten und der Zeitaufwand auf ihn, und er ist nicht in der Lage, die Veränderung selbst vorzunehmen. Die Wahl von Werkstätten, die diese Dienstleistungen ggf. kostengünstiger anbieten, ist häufig keine Alternative, da die Eingriffe mit einem Garantieverlust oder einer Beschädigung einhergehen können, wenn sie unsachgemäß ausgeführt werden.

Es ist Aufgabe der Erfindung, eine einfach aufgebaute und zu handhabende und kostengünstig herzustellende Vorrichtung zur Veränderung von Betriebsparameterwerten und/oder Firmware von elektronischen Steuerungseinrichtungen von Kraftfahrzeugen bereitzustellen, mit der die Anzahl der notwendigen Bedienschritte verringert wird und dennoch auf verschiedene Steuerungseinrichtungen eingewirkt werden kann, und ein entsprechendes Verfahren zur Veränderung von Betriebsparameterwerten und/oder Firmware von elektronischen Steuerungseinrichtungen von Kraftfahrzeugen anzugeben.

Diese Aufgabe wird durch eine Vorrichtung mit den Merkmalen des Anspruchs 1 und ein Verfahren mit den Merkmalen des Anspruchs 13 gelöst. Vorteilhafte Ausgestaltungen der Vorrichtung und des Verfahrens sind Gegenstand der jeweils zugehörigen Unteransprüche.

Nach der vorliegenden Erfindung ist vorgesehen, dass eine Vorrichtung zur Veränderung von Betriebsparametern bzw. Betriebsparameterwerten und/oder Firmware bzw. Firmwarekomponenten von elektronischen Steuerungseinrichtungen von Kraftfahrzeugen, wie z.B. PKWs und LKWs, portabel ausgebildet ist und eine elektronische Speichereinrichtung aufweist, die angepasst ist, um Firmwarekomponenten und/oder Werte von Betriebsparametern für eine oder mehrere elektronische Steuerungseinrichtungen eines Kraftfahrzeugs zu speichern. Mit anderen Worten können in der Speichereinrichtung für verschiedene Speichereinrichtungen verschiedene Daten gespeichert werden bzw. sind in der Speichereinrichtung verschiedene Daten gespeichert, die Firmwarekomponenten und/oder Betriebsparameterwerten von jeweils einer bestimmten Art und einem bestimmten Typ von Steuerungseinrichtung entsprechen. Zu jeder Speichereinrichtung gehört demnach ein Datensatz (Firmwarekomponenten und/oder Betriebsparameterwerte), und ein oder mehrere Datensätze sind in der Speichereinrichtung gespeichert. So können sich die Daten beispielsweise auf eine Motorsteuerungseinrichtung des Typs A des Herstellers B und auf eine Getriebesteuerungseinrichtung des Typs C des Herstellers D beziehen. Wie oben angegeben wurde, ist die Vorrichtung zur Verwendung mit Kraftfahrzeugen angepasst, bei denen eine bzw. regelmäßig mehrere elektronische Steuerungseinrichtungen mit einem gemeinsamen Kommunikationsbus des Kraftfahrzeugs verbunden sind, der wiederum einen Kommunikationsanschluss aufweist, an den vorübergehend externe Vorrichtungen angeschlossen werden können.

Der Begriff "Betriebsparameter" umfasst allgemein alle Parameter, für die eine Wertänderung eine Änderung des Steuerungsverhaltens oder ggf. auch des sonstigen Betriebs einer Steuerungseinrichtung zur Folge hat. Unter "Kommunikationsbus" ist gemäß der vorliegenden Erfindung jedes Bussystem zu verstehen, welches geeignet ist, die einzelnen Steuerungseinrichtungen von Kraftfahrzeugen untereinander und mit einem Kommunikationsanschluss zu verbinden. Unter dem Begriff "Firmware" sind in üblicher Weise alle in einer Steuerungseinrichtung implementierten Programme zu verstehen, die den Betrieb und die Arbeitsweise der Steuerungseinrichtung bestimmen, z.B. den Ablauf eines bestimmten Regelalgorithmus implementieren, dessen Regelzusammenhang noch Betriebsparameter enthalten kann. Unter Betriebsparameter werden dabei u.a. insbesondere auch Variablen innerhalb des Regelzusammenhangs und Vergleichsgrößen und Grenzgrößen verstanden. Beispiele für Betriebsparameter sind etwa ein Sollwert des Ladedrucks, ein Sollwert der Drosselklappenstellung, die Einspritzmenge, usw. Unter Firmwarekomponenten sind Teile der Firmware oder die gesamte Firmware einer Steuerungseinrichtung zu verstehen.

Die portable Vorrichtung weist ferner eine Prozessoreinrichtung auf, die mit der Speichereinrichtung verbunden und angepasst ist, um in der Speichereinrichtung gespeicherte Firmwarekomponenten und/oder Betriebsparameterwerte aus der Speichereinrichtung auszulesen und in der im Folgenden beschriebenen Weise weiter zu verarbeiten. Die Prozessoreinrichtung kann einen einzelnen Prozessor oder auch eine Gruppe von Prozessoren und Hilfskomponenten aufweisen. Es ist bevorzugt, wenn die Prozessoreinrichtung möglichst einfach aufgebaut ist.

Außerdem weist die portable Vorrichtung eine mit der Prozessoreinrichtung verbundene Schnittstelleneinrichtung auf, die angepasst ist, um mit dem Kommunikationsanschluss des Kommunikationsbusses eines Kraftfahrzeuges lösbar so verbunden zu werden, dass ein Datenaustausch zwischen der Prozessoreinrichtung der portablen Vorrichtung und den mit dem Kommunikationsbus verbundenen elektronischen Steuerungseinrichtungen des Kraftfahrzeuges über den Kommunikationsbus möglich ist. Mit anderen Worten kann die Schnittstelleneinrichtung, die im Allgemeinen einen geeigneten Stecker umfassen wird, wie zum Beispiel einen mit der üblichen OBD-2-Diagnosebuchse kompatiblen Stecker oder einen an eine Anschlussbuchse eines bestimmten Fahrzeugherstellers angepassten Stecker, an den Kommunikationsanschluss angeschlossen werden, und dabei wird eine Datenverbindung zwischen der Prozessoreinrichtung und dem Kommunikationsbus hergestellt. Bei üblichen Kommunikationsbussystemen, die nach dem Master-Slave-Prinzip arbeiten, ist es bevorzugt, wenn sich die Prozessoreinrichtung nach der Herstellung des Anschlusses selbständig als Busteilnehmer am Kommunikationsbus anmeldet. Dabei ist es bevorzugt, dass die Prozessoreinrichtung die Rolle eines Masters einnimmt, während die Steuerungseinrichtungen des Fahrzeugs als Slaves kommunizieren.

Die Prozessoreinrichtung ist mit einer Übersetzungseinrichtung versehen bzw. ihr ist eine Übersetzungseinrichtung zugeordnet, die angepasst ist, damit die Prozessoreinrichtung mit ihrer Hilfe Daten nach einer Vielzahl unterschiedlicher Kommunikationsprotokolle über die Schnittstelleneinrichtung senden, empfangen und interpretieren kann. Das bedeutet, dass die Prozessoreinrichtung auch dann, wenn die an den jeweiligen Kommunikationsbus angeschlossenen Steuerungseinrichtungen nach verschiedenen Kommunikationsprotokollen arbeiten, ohne weiteres Zutun eines Bedieners mit verschiedenen Steuerungseinrichtungen kommunizieren kann. Dabei sorgt die Übersetzungseinrichtung selbsttätig bzw. unter Steuerung der Prozessoreinrichtung dafür, dass die Steuerungseinrichtungen von der Prozessoreinrichtung Daten in einem für sie verständlichen Format empfangen und dass die Prozessoreinrichtung die von den Steuerungseinrichtungen gesendeten Daten empfangen und verstehen kann. Unter dem Begriff Kommunikationsprotokoll werden dabei im Rahmen der vorliegenden Anmeldung alle für die Datenkommunikation zwischen der Prozessoreinrichtung und einer Steuerungseinrichtung über den Kommunikationsbus relevanten Parameter, Formate und Regeln zusammengefasst. Dazu gehören unter anderem auch die Art und Form von Befehlen oder der Aufbau von Datenpaketen.

Ferner ist die Prozessoreinrichtung angepasst, um in der bereits angedeuteten Weise nach dem Herstellen einer lösbaren Verbindung der Schnittstelleneinrichtung mit dem Kommunikationsanschluss des Kommunikationsbusses eines Kraftfahrzeugs selbsttätig eine Kommunikationsverbindung über den Kommunikationsbus herzustellen, d.h. z.B. sich an dem Kommunikationsbus etwa als Master anzumelden, und anschließend eine Bestandsaufnahme der einzelnen an den Kommunikationsbus angeschlossenen elektronischen Steuerungseinrichtungen des Kraftfahrzeugs sowie der von den einzelnen elektronischen Steuerungseinrichtungen verwendeten Kommunikationsprotokolle durchzuführen. Mit anderen Worten fragt die Prozessoreinrichtung zunächst die an den Kommunikationsbus angeschlossenen Steuerungseinrichtungen ab, um zum Beispiel festzustellen, welche Steuerungseinrichtungen von welchem Hersteller und von welchem Typ bzw. von welcher Serie vorhanden sind. Die Herstellung der Kommunikationsverbindung kann ferner erfordern, dass die Prozessoreinrichtung feststellt, welche Art von Kommunikationsbus vorliegt und entsprechend zu handeln. Es ist daher bevorzugt, wenn die Prozessoreinrichtung (und die Übersetzungseinrichtung) angepasst ist (sind), um verschiedene Kommunikationsbusse zu erkennen und die entsprechenden Schritte zu unternehmen, um jeweils eine Datenverbindung herzustellen. Ferner ist es bevorzugt, wenn die Prozessoreinrichtung angepasst ist, um in diesem Zusammenhang die Bordspannung und den Status der einzelnen Steuerungseinrichtungen zu überwachen. Die selbsttätige Herstellung einer Kommunikationsverbindung nach dem Herstellen einer lösbaren Verbindung der Schnittenstelleneinrichtung mit dem Kommunikationsanschluss schließt nicht aus, dass zuvor noch eine ggf. an der Vorrichtung vorgesehene Schaltvorrichtung betätigt, wie zum Beispiel ein Startknopf oder Startschalter, oder z.B. die Zündung des Fahrzeugs eingeschaltet werden muss.

Schließlich ist die Prozessoreinrichtung angepasst, um selbsttätig nach der Herstellung der Kommunikationsverbindung mit Hilfe der Übersetzungseinrichtung für jede erkannte elektronische Steuerungseinrichtung festzustellen, ob für diese in der elektronischen Speichereinrichtung Firmwarekomponenten und/oder Betriebsparameterwerte gespeichert sind, und dann, wenn dies der Fall ist, über den Kommunikationsbus gemäß dem dieser elektronischen Steuerungseinrichtung entsprechenden Kommunikationsprotokoll Programmierbefehle und den betreffenden, in der Speichereinrichtung gespeicherten Firmwarekomponenten und/oder Betriebsparameterwerten entsprechende Daten an die jeweilige elektronische Steuerungseinrichtung zu senden.

Die Programmierbefehle und Daten sind dabei durch die Prozessoreinrichtung und die Übersetzungseinrichtung angepasst, um die Firmwarekomponenten und/oder Betriebsparameterwerte in der jeweiligen Steuerungseinrichtung zu implementieren. Mit anderen Worten sind die Programmierbefehle und Daten, die von der adressierten Steuerungseinrichtung auf dem Kommunikationsbus empfangen werden, so ausgestaltet, dass die Steuerungseinrichtung nach dem Empfang die neuen Firmwarekomponenten und/oder Betriebsparameterwerte in ihrem Speicher bzw. ihren Speichern implementiert.

Diese portable Vorrichtung hat den Vorteil, dass es zur gezielten Veränderung der Funktionsweise der elektronischen Steuerungseinrichtungen eines Kraftfahrzeugs lediglich erforderlich ist, geeignete Firmwarekomponenten und/oder Betriebsparameterwerte für die entsprechenden Steuerungseinrichtungen in der Speichereinrichtung der Vorrichtung zu speichern, wobei die Speicherung bevorzugt unabhängig von den von den Steuerungseinrichtungen verwendeten Kommunikationsprotokollen in einem einheitlichen Format erfolgen kann, und anschließend die Vorrichtung an den Kommunikationsbus des Kraftfahrzeugs anzuschließen. Die Veränderung der Firmware bzw. Betriebsparameterwerte erfolgt dann vollautomatisch, d.h. sie arbeitet komplett autonom. Die portable Vorrichtung weist bevorzugt ein Gehäuse auf, in dem bzw. an dem alle Komponenten der Vorrichtung untergebracht sind, und kann eine Form ähnlich derjenigen eines USB-Sticks haben, und die eigentliche Umprogrammierung der Steuerungseinrichtungen erfordert nur das Einstecken dieses "USB-Sticks" in die passende Buchse mit einer sehr einfach und schnell zu realisierenden Steckverbindung, und die Umprogrammierung kann anschließend ohne weitere Eingabe oder Einflussnahme auf den Prozess im Sinne einer "Plug and Play"-Funktion erfolgen. Insbesondere kann die Schnittstelleneinrichtung einen unmittelbar am Gehäuse angeordneten Stecker aufweisen, so dass die Vorrichtung ohne Kabel direkt mit dem Kommunikationsanschluss verbunden werden kann bzw. in die entsprechende Buchse eingesteckt werden kann. Zur Veränderung der Eigenschaften aller Steuerungseinrichtungen eines Fahrzeugs ist es lediglich erforderlich, zwischen der mit einem Datensatz bzw. Datensätzen mit veränderten Daten bestückten Vorrichtung und dem Kommunikationsanschluss eines Kraftfahrzeugs eine Steckverbindung herzustellen, zu warten bis die Daten übertragen wurden und die Steckverbindung wieder zu lösen.

Soll in einem bestimmten Anwendungsfall eine bestimmte Veränderung der Betriebsweise eines bestimmten Kraftfahrzeugs erzielt werden, müssen die in der Speichereinrichtung zu speichernden Firmwarekomponenten und/oder Betriebsparameterwerte bevorzugt an das betreffende Kraftfahrzeug und die in diesem vorhandenen Steuerungseinrichtungen und die gewünschte Veränderung ihrer Funktionsweise angepasst sein. In diesem Fall wird daher die Vorrichtung bevorzugt durch die Speicherung eines bestimmten Gesamtdatensatzes, der Datensätze mit geeignet veränderten Daten für die verschiedenen Steuerungseinrichtungen des Fahrzeugs enthält, an ein bestimmtes Fahrzeug bzw. einen bestimmten Fahrzeugtyp angepasst. Dies kann beispielsweise erfolgen, indem der Hersteller des Kraftfahrzeugs die entsprechenden Vorrichtungen für seine verschiedenen Kraftfahrzeugtypen herstellt und an Werkstätten oder sogar an Endverbraucher versendet, wobei beispielsweise regionale klimatische Besonderheiten Berücksichtigung finden können. Die Bedienung der Vorrichtung ist so einfach, dass sogar letztere sie bedienen können. Alternativ könnte z.B. eine Werkstatt anbieten, nach Aufnahme der Daten eines bestimmten Kraftfahrzeugs und der Wünsche seines Besitzers an das Betriebsverhalten eine Vorrichtung mit einem geeigneten Gesamtdatensatz zur Verfügung zu stellen. Die Vorrichtung ist so einfach aufgebaut und kostengünstig herzustellen, dass sie als Wegwerfartikel zur einmaligen Verwendung - d.h. zur einmaligen Aktualisierung bzw. Veränderung der Steuerungseinrichtungen eines Fahrzeugs - ausgestaltet sein kann.

Geht es um eine Fehlerbehebung und eine allgemeine Veränderung an einer Vielzahl von Steuerungseinrichtungen, die nicht notwendigerweise zusammen in einem Fahrzeug vorhanden sein müssen, so könnten für alle interessierenden Steuerungseinrichtungen geeignete Datensätze gespeichert werden, so dass mit anderen Worten eine Art Universaldatensatzsammlung bzw. Universalgesamtdatensatz geschaffen wird, der für viele verschiedene Fahrzeuge vorgesehen ist. Die portable Vorrichtung sucht dann während des vollautomatischen Umprogrammierungsvorgangs an einem bestimmten Fahrzeug selbsttätig die jeweils zu den vorhandenen Steuerungseinrichtungen passenden Daten heraus.

In einer bevorzugten Ausführungsform sind die Firmwarekomponenten und/oder Betriebsparameterwerte zur Vereinfachung der Erstellung und Speicherung der Datensätze für verschiedene Steuerungseinrichtungen in der Speichereinrichtung in einem einheitlichen, steuerungseinrichtungsunabhängigen Format gespeichert. Dabei ist es ferner bevorzugt, wenn die Prozessoreinrichtung und die Speichereinrichtung so angepasst sind, dass die Kommunikation zwischen der Prozessoreinrichtung und der Speichereinrichtung, d.h. das Auslesen von Daten aus der Speichereinrichtung und das Schreiben von Daten in die Speichereinrichtung, in einem einheitlichen, steuerungseinrichtungsunabhängigen Kommunikationsprotokoll stattfindet. Auf diese Weise wird der Aufbau der Vorrichtung vereinfacht, weil die Prozessoreinrichtung einfach mit der Speichereinrichtung kommunizieren kann.

In einer bevorzugten Ausführungsform ist die Übersetzungseinrichtung in der Weise in die Prozessoreinrichtung integriert, dass die Prozessoreinrichtung unmittelbar in den jeweiligen Kommunikationsprotokollen sendet und empfängt. Mit anderen Worten ist die Prozessoreinrichtung so ausgebildet, dass nicht ein Teil von ihr zunächst Daten in einem ersten Format an die Übersetzungseinrichtung sendet und diese dann eine Übersetzung in ein zweites Format vornimmt. Vielmehr werden die auf dem Kommunikationsbus zu sendenden Daten unmittelbar in der Übersetzungseinrichtung aus den aus der Speichereinrichtung ausgelesenen Daten erzeugt. Diese Ausgestaltung hat den Vorteil, dass die Prozessoreinrichtung insgesamt als integriertes Bauteil und damit sehr einfach aufgebaut sein kann.

Allerdings kann dadurch eine Anpassung der Prozessoreinrichtung erschwert werden, falls neue Steuerungseinrichtungen mit neuen oder modifizierten Kommunikationsprotokollen berücksichtigt werden müssen. Daher umfasst die Prozessoreinrichtung in einer alternativen bevorzugten Ausführungsform einen Hauptprozessor und eine separate Übersetzungseinrichtung, wobei die Übersetzungseinrichtung zwischen dem Hauptprozessor und der Schnittstelleneinrichtung angeordnet ist. Der Hauptprozessor ist dann angepasst, Programmierbefehle und Daten, die von dem Hauptprozessor über die Schnittstelleneinrichtung an eine bestimmte Steuerungseinrichtung gesendet werden sollen, zunächst nach einem einheitlichen Kommunikationsprotokoll an die Übersetzungseinrichtung zu senden. Die Übersetzungseinrichtung ist ferner angepasst, um diese Programmierbefehle und Daten aus dem einheitlichen Kommunikationsprotokoll in das Kommunikationsprotokoll der jeweiligen Steuerungseinrichtung zu übersetzen und in übersetzter Form an die Schnittstelleneinrichtung weiter zu senden. Umgekehrt ist die Übersetzungseinrichtung auch angepasst, um von der jeweiligen Steuerungseinrichtung in ihrem Kommunikationsprotokoll über den Kommunikationsbus gesendete Daten in das einheitliche Kommunikationsprotokoll zu übersetzen und in diesem an den Hauptprozessor weiter zu leiten. Eine Veränderung der Übersetzungsfunktion erfordert dann keine Modifizierung und keinen Austausch des Hauptprozessors.

In einer vorteilhaften Ausbildung ist die elektronische Speichereinrichtung in einem aus der portablen Vorrichtung entfernbaren Speicherelement vorgesehen oder die Speichereinrichtung umfasst ein entfernbares Speicherelement. Dies hat den Vorteil, dass zur Anpassung der portablen Vorrichtung an einen bestimmten Anwendungsfall lediglich der entsprechende Gesamtdatensatz in einem Speicherelement oder Speichermodul gespeichert werden muss, das dann lösbar in der portablen Vorrichtung angeordnet wird, z.B. in einem geeigneten Steck- bzw. Anschlussplatz. Dazu kann beispielsweise eine übliche Speicherkarte, wie beispielsweise eine SD-Karte, verwendet werden, die einfach in einen geeigneten Steckplatz in der Vorrichtung eingesteckt werden kann. Es ist möglich, dass die elektronische Speichereinrichtung neben einem entfernbaren Speicherelement auch eine nicht entfernbare Speicherkomponente umfasst.

Im Fall eines entfernbaren Speicherelements kann es ferner vorteilhaft sein, wenn sowohl in dem entfernbaren Speicherelement als auch in der Prozessoreinrichtung ein Schlüssel fest gespeichert und insbesondere unveränderbar gespeichert ist und die Prozessoreinrichtung angepasst ist, um nur dann zu arbeiten, wenn die beiden Schlüssel zueinander passen, d.h. zum Beispiel übereinstimmen. Eine solche Ausgestaltung, in der das entfernbare Speicherelement mit der Prozessoreinrichtung verheiratet ist, ermöglicht es einer Person, die die portablen Vorrichtungen bereitstellt, die Vorteile eines entfernbaren Speicherelements in Zusammenhang mit der Speicherung veränderter Firmwarekomponenten und/oder Betriebsparameterwerte zu nutzen, aber eine spätere Manipulation an dem Speicherelement oder eine unerwünschte Weitergabe oder einen unerwünschten Weiterkauf von nur dem Speicherelement zur Verwendung in einer anderen portablen Vorrichtung zu verhindern. In diesem Zusammenhang ist es bevorzugt, wenn die Daten in der Speichereinrichtung verschlüsselt gespeichert sind und von der Prozessoreinrichtung entschlüsselt werden müssen.

Es ist von Vorteil, wenn die Schnittstelleneinrichtung ein Steckverbindungselement umfasst, das angepasst ist, um mit einem als komplementäres Steckverbindungselement ausgestalteten Kommunikationsanschluss des Kommunikationsbusses eines Kraftfahrzeuges durch Herstellung einer Steckverbindung verbunden werden zu können. Die eigentliche Umprogrammierung erfordert dann bevorzugt nur ein Hineinstecken der Vorrichtung in den Kommunikationsanschluss und nach Abschluss der Umprogrammierung das Ausstecken.

Der Kommunikationsbus kann als K-Leitung (gemäß ISO 9141, ISO 14230-1), L-Leitung oder CAN-Bus (ISO 11898) oder als ein beliebiges anderes zur On Board Diagnose (OBD) geeignetes Bussystem ausgestaltet sein.

In einer bevorzugten Ausführungsform ist die Prozessoreinrichtung angepasst, um nach Anschluss der Vorrichtung an den Kommunikationsanschluss eines bestimmten Kraftfahrzeugs festzustellen, ob die Vorrichtung bereits einmal an das Kraftfahrzeug angeschlossen war, und, wenn dies nicht der Fall war, vor der vorzunehmenden Änderung von Firmwarekomponenten und/oder Betriebsparameterwerten die Firmwarekomponenten und/oder Betriebsparameterwerte aus den Steuerungseinrichtungen auszulesen und als Sicherungskopie in der Speichereinrichtung zu speichern. Die Sicherungskopie wird bevorzugt in demselben Format gespeichert wie die veränderten Firmwarekomponenten und/oder Betriebsparameterwerte.

Mit anderen Worten ist die Vorrichtung insgesamt und insbesondere die Prozessoreinrichtung dazu ausgelegt, vor jeglicher Veränderung bzw. Umprogrammierung von Steuerungseinrichtungen eines Fahrzeugs gegenüber dem Originalzustand diesen Originalzustand in der Speichereinrichtung zu sichern. Dabei wird für das betreffende Fahrzeug ein Original-Gesamtdatensatz gespeichert, der die Originaldatensätze der einzelnen an den Kommunikationsbus angeschlossenen Steuerungseinrichtungen des Fahrzeugs oder ggf. auch nur derjenigen Steuerungseinrichtungen enthält, für die eine Veränderung vorzunehmen ist. Demnach sind in der Speichereinrichtung anschließend für das Fahrzeug der Original-Gesamtdatensatz und Datensätze mit veränderten bzw. angepassten Firmwarekomponenten und/oder Betriebsparameterwerten bzw. ein angepasster bzw. veränderter Gesamtdatensatz für das Fahrzeug gespeichert. Sollte die Veränderung nicht die gewünschten Wirkungen haben oder sollte es aus anderen Gründen wünschenswert sein, den Originalzustand wieder herzustellen (beispielsweise vor einem Verkauf des Fahrzeugs), so werden auf diese Weise die für die Rückkehr erforderlichen Daten in der Vorrichtung bereit gehalten. Die Feststellung, ob die Vorrichtung bereits mit dem Kraftfahrzeug verbunden war, kann auf verschiedene Weisen durchgeführt werden. So kann beispielsweise von der Prozessoreinrichtung mit Hilfe der Übersetzungseinrichtung mit Hilfe geeigneter Befehlssignale über den Kommunikationsbus nach Benutzeraufforderung oder bevorzugt selbsttätig auch eine für das jeweilige Kraftfahrzeug charakteristische Größe ausgelesen werden, wie z.B. die Fahrgestellnummer. Die Prozessoreinrichtung ist dann angepasst, um bevorzugt selbsttätig zu prüfen, ob in der Speichereinrichtung bereits eine Sicherungskopie zu der ausgelesenen charakteristischen Größe vorhanden ist, und um die Sicherungskopie zusammen mit einer zugeordneten Angabe der charakteristischen Größe zu speichern. Es ist aber auch denkbar, dass die Prozessoreinrichtung angepasst ist, um zu prüfen, ob überhaupt eine Sicherungskopie in der Speichereinrichtung gespeichert ist, und um nur dann eine Sicherungskopie zu speichern, wenn noch gar keine Sicherungskopie vorhanden ist. Diese Ausgestaltung ist besonders einfach zu realisieren und von Vorteil, wenn die Vorrichtung lediglich zur Verwendung mit einem bestimmten Kraftfahrzeug vorgesehen ist.

In dieser Ausführungsform ist es besonders bevorzugt, wenn die Vorrichtung einen mit der Prozessoreinrichtung in Verbindung stehenden, von einem Bediener betätigbaren Schalter aufweist, der eine erste Schalterstellung und eine zweite Schalterstellung hat, wobei die Prozessoreinrichtung angepasst ist, um das Senden von Programmierbefehlen und Firmwarekomponenten und/oder Betriebsparameterwerten entsprechenden Daten an die Steuerungseinrichtungen zur Implementierung der Firmwarekomponenten und/oder Betriebsparameterwerte in den Steuerungseinrichtungen so durchzuführen, dass die Daten in der ersten Schalterstellung veränderten Firmwarekomponenten und/oder Betriebsparameterwerten entsprechen (d.h. dem angepassten bzw. veränderten Gesamtdatensatz) und, soweit eine Sicherungskopie für das jeweilige Fahrzeug in der Speichereinrichtung gespeichert ist, in der zweiten Schalterstellung den Firmwarekomponenten und/oder Betriebsparameterwerten der Sicherungskopie entsprechen. Durch Betätigung des Schalters kann also bestimmt werden, ob die Steuerungseinrichtungen mit Datensätzen ursprünglicher Daten oder mit Datensätzen veränderter Daten programmiert wird. Das Zurückspielen der Sicherungskopie und die Wiederherstellung des Originalzustands ist dadurch jederzeit auf genau dieselbe einfache Weise möglich, wie die Veränderung von Firmwarekomponenten und/oder Betriebsparameterwerten gegenüber dem Originalzustand.

Um Steuerungseinrichtungen vor unbefugten und unsachgemäßen Veränderungen zu schützen, ist bei manchen Steuerungseinrichtungen vorgesehen, dass eine Veränderung von Firmwarekomponenten und zumindest bestimmten Betriebsparameterwerten nicht möglich ist, ohne zuvor ein Autorisierungsverfahren zu durchlaufen. Nicht autorisierten Personen bzw. Geräten wird der verändernde Zugriff auf die Steuerungseinrichtung verweigert. Ein solches Autorisierungsverfahren kann von der Steuerungseinrichtung nach Empfang von Programmierbefehlen und veränderten Daten initiiert werden oder bereits in einer Kommunikationseinleitungsphase bevor überhaupt Programmierbefehle akzeptiert werden. Diese Autorisierungsverfahren sind üblicherweise so ausgestaltet, dass die Steuerungseinrichtung über den Kommunikationsbus einen Autorisierungsanfragecode sendet, der beispielsweise eine mehrstellige Zahlenfolge sein kann und beispielsweise bei jeder Autorisierung nach einem Zufallsprinzip neu erstellt wird. Als Antwort auf diesen Autorisierungsanfragecode erwartet die Steuerungseinrichtung dann einen bestimmten, durch einen in der Steuerungseinrichtung implementierten Autorisierungsalgorithmus berechneten Antwortcode, beispielsweise wieder eine mehrstellige Zahlenfolge. Nur wenn die Steuerungseinrichtung den richtigen Antwortcode empfängt, lässt sie eine Umprogrammierung zu.

Vor diesem Hintergrund ist in einer bevorzugten Ausführungsform in der Speichereinrichtung eine Nachschlagetabelle gespeichert, die für eine Vielzahl verschiedener Steuerungseinrichtungen jeweils einen Autorisierungsalgorithmus enthält, der von den Herstellern der Steuerungseinrichtungen bereitgestellt oder beispielsweise durch Reverse Engineering gewonnen werden kann. Ferner ist die Prozessoreinrichtung angepasst, um in dem Fall, dass eine Steuerungseinrichtung vor dem Zulassen einer Implementierung veränderter Firmwarekomponenten und/oder Betriebsparameterwerte eine Autorisierung erfordert und über den Kommunikationsbus einen entsprechenden Autorisierungsanfragecode sendet, selbsttätig den Autorisierungsanfragecode zu empfangen, mit Hilfe der Nachschlagetabelle den der anfragenden Steuerungseinrichtung zugeordneten Autorisierungsalgorithmus zu bestimmen, mit Hilfe des Autorisierungsalgorithmus aus dem Autorisierungsanfragecode einen Autorisierungsantwortcode zu berechnen und den Autorisierungsantwortcode an die Steuerungseinrichtung zu senden. Wie bei jeder Kommunikation zwischen einer Steuerungseinrichtung und der Prozessoreinrichtung sorgt die Übersetzungseinrichtung dafür, dass die Steuerungseinrichtung Daten und Befehle in ihrem Kommunikationsprotokoll erhält und dass die Prozessoreinrichtung von der Steuerungseinrichtung in ihrem Kommunikationsprotokoll gesendete Daten und Befehle interpretieren und verarbeiten kann.

In einer bevorzugten Ausführungsform ist die Prozessoreinrichtung eingerichtet, um unmittelbar nach Herstellung einer Verbindung zwischen der Schnittstelleneinrichtung der Vorrichtung und dem Kommunikationsanschluss des Kommunikationsbus eines Kraftfahrzeuges selbsttätig eine für das Kraftfahrzeug charakteristische Kennung auszulesen, wie zum Beispiel die Fahrgestellnummer, und um nur dann bestimmungsgemäß zu arbeiten, wenn die ausgelesene Kennung mit einer in der Speichereinrichtung gespeicherten Kennung übereinstimmt. Mit anderen Worten ist in der Speichereinrichtung eine für ein bestimmtes Kraftfahrzeug kennzeichnende Kennung bevorzugt unveränderbar gespeichert, und die Prozessoreinrichtung kann nur dann die beschriebene Veränderung von Firmwarekomponenten und/oder Betriebsparameterwerten vornehmen, wenn die Kennung des jeweiligen Fahrzeugs mit der gespeicherten Kennung übereinstimmt. Auch in diesem Zusammenhang ist es bevorzugt, wenn die Daten in der Speichereinrichtung verschlüsselt gespeichert sind und von der Prozessoreinrichtung entschlüsselt werden müssen. Die Verschlüsselung kann dabei in Abhängigkeit von der gespeicherten charakteristischen Kennung vorgenommen sein, und die Prozessoreinrichtung kann angepasst sein, um die Entschlüsselung in Abhängigkeit von der charakteristischen Kennung des jeweils angeschlossenen Fahrzeugs zu versuchen.

In einer vorteilhaften Ausgestaltung weist die Vorrichtung eine Anzeigeeinrichtung, zum Beispiel in Form einer oder mehrerer LEDs auf, mit der verschiedene Betriebsvorgänge und/oder -zustände der Vorrichtung angezeigt werden können. Diese können etwa durch verschiedene Farben und/oder Blinkmuster gekennzeichnet werden. Die Anzeigeeinrichtung wird durch die bzw. mit Hilfe der Prozessoreinrichtung gesteuert. Beispielsweise kann vorgesehen sein, dass durch die Anzeigeeinrichtung angezeigt wird, dass die Prozessoreinrichtung Daten an eine Steuerungseinrichtung sendet, dass die Prozessoreinrichtung Daten in der Speichereinrichtung speichert, dass die Prozessoreinrichtung einen Kommunikationsvorgang mit den Steuerungseinrichtungen des angeschlossenen Fahrzeugs ausführt, um eine Veränderung von Firmwarekomponenten und/oder Betriebsparameterwerten der Steuerungseinrichtungen durchzuführen, dass ein solcher Kommunikationsvorgang und die Veränderung erfolgreich durchgeführt worden ist, dass ein Fehler aufgetreten ist und/oder dass die Vorrichtung erfolgreich am Kommunikationsbus angemeldet ist. Selbstverständlich könnte als Anzeigeeinrichtung auch ein Display vorgesehen sein.

Aus der vorangegangenen Beschreibung ergibt sich bereits, dass die portable Vorrichtung in vorteilhafter Weise zur Verwendung in einem Verfahrens zur Veränderung von Betriebsparameterwerten und/oder Firmwarekomponenten von elektronischen Steuerungseinrichtungen von Kraftfahrzeugen angepasst ist, in denen die elektronischen Steuerungseinrichtungen über einen Kommunikationsbus untereinander und mit einem Kommunikationsanschluss verbunden sind. Dabei wird eine Vorrichtung bereitgestellt, wie sie oben ausführlich beschrieben ist, und es werden Firmwarekomponenten und/oder Betriebsparameterwerte für eine oder bevorzugt mehrere elektronische Steuerungseinrichtungen eines Kraftfahrzeugs oder mehrerer Kraftfahrzeuge in der Speichereinrichtung der Vorrichtung gespeichert. Anschließend wird die Vorrichtung mit ihrer Schnittstelleneinrichtung lösbar mit dem Kommunikationsanschluss des Kommunikationsbusses eines Kraftfahrzeugs verbunden. Wie oben erläutert worden ist, ist die Vorrichtung dazu angepasst, dann selbsttätig bzw. im Wesentlichen selbsttätig (z.B. wenn noch die Betätigung einer Starttaste vorgesehen ist) verschiedene Verfahrensschritte durchzuführen, mit denen eine Veränderung von Betriebsparameterwerten und/oder Firmwarekomponenten von elektronischen Steuerungseinrichtungen des Kraftfahrzeugs durchgeführt wird, sofern zumindest einige der in der Speichereinrichtung gespeicherten Betriebsparameterwerte und/oder Firmwarekomponenten zu mindestens einer der Steuereinrichtungen des Kraftfahrzeugs gehören. Die Speicherung ist besonders einfach durchzuführen, wenn die Speichereinrichtung ein entfernbares Speicherelement, wie z.B. eine übliche SD-Karte, aufweist, die lediglich in die vorbereitete Restvorrichtung eingesetzt werden muss.

Das Speichern von Firmwarekomponenten und/oder Betriebsparameterwerten für mindestens eine elektronische Steuerungseinrichtung eines Kraftfahrzeugs in der Speichereinrichtung der Vorrichtung kann in einer bevorzugten Ausgestaltung in der Weise erfolgen, dass zunächst für ein bestimmtes Kraftfahrzeug ermittelt wird, welche Steuerungseinrichtungen in dem Fahrzeug vorhanden sind, und anschließend Firmwarekomponenten und/oder Betriebsparameterwerte für eine oder mehrere der elektronischen Steuerungseinrichtungen des bestimmten Kraftfahrzeugs in der Speichereinrichtung der Vorrichtung gespeichert werden. Dies ist von Vorteil, wenn die portable Vorrichtung, z.B. als Wegwerfvorrichtung, nur zur Verwendung mit genau einem bestimmten Fahrzeug vorgesehen sein soll, etwa um einmalig eine Umprogrammierung eines bestimmten Fahrzeugs zur Veränderung seiner Betriebseigenschaften zu ermöglichen. In dieser Verfahrensausgestaltung sind die oben beschriebenen Ausführungsformen der Vorrichtung besonders vorteilhaft, in denen in der Speichereinrichtung eine für das bestimmte Fahrzeug charakteristische Kennung gespeichert wird und/oder ein entfernbares Speicherelement mit der Prozessoreinrichtung verheiratet wird.

Ferner kann es vorteilhaft sein, das Speichern von Firmwarekomponenten und/oder Betriebsparameterwerten für mindestens eine elektronische Steuerungseinrichtung eines Kraftfahrzeugs in der Speichereinrichtung der Vorrichtung in der Weise durchzuführen, dass Firmwarekomponenten und/oder Betriebsparameterwerte für eine Vielzahl verschiedener elektronischer Steuerungseinrichtungen von Kraftfahrzeugen in der Speichereinrichtung der Vorrichtung gespeichert werden. Dann ist es möglich, dass die Vorrichtung an vielen verschiedenen Kraftfahrzeugen mit ggf. ganz unterschiedlichen Steuerungseinrichtungen verwendet wird.

Es ist auch denkbar, die Vorrichtung zur Verwendung mit anderen Typen von Fahrzeugen auszugestalten und anzupassen und das Verfahren auf derartige Fahrzeuge anzuwenden.

Die Erfindung wird im Folgenden anhand von Ausführungsbeispielen der Vorrichtung näher erläutert, die in den Zeichnungen dargestellt sind.
- Figur 1: zeigt ein erstes Ausführungsbeispiel einer erfindungsgemäßen Vorrichtung.
- Figur 2: zeigt ein zweites Ausführungsbeispiel einer erfindungsgemäßen Vorrichtung.

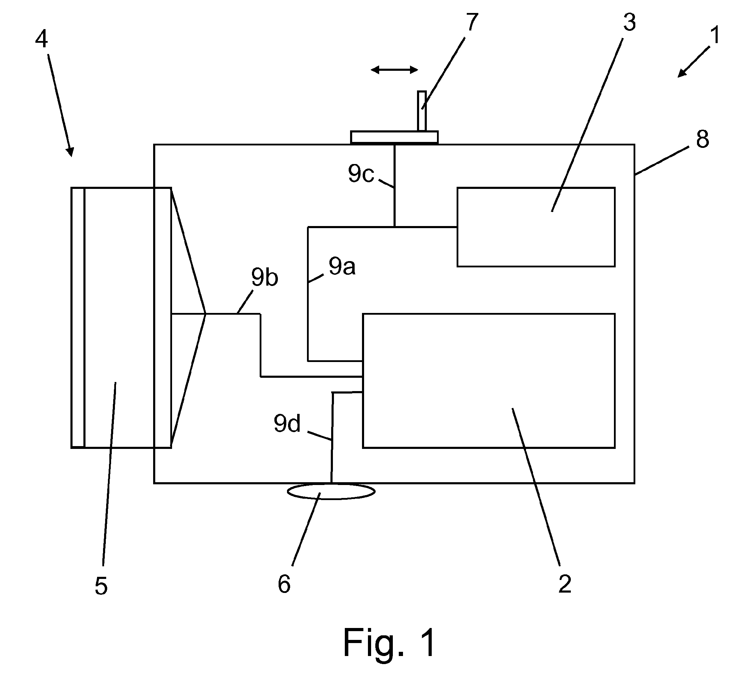

Die in Figur 1 gezeigte Vorrichtung 1 umfasst eine Prozessoreinrichtung 2, eine Speichereinrichtung 3, eine Schnittstelleneinrichtung 4 mit einem Steckverbindungselement 5, eine Anzeigeeinrichtung 6 und einen Schalter 7. Die Prozessoreinrichtung 2 und die Speichereinrichtung 3 sind in einem Gehäuse 8 angeordnet, das in Form und Größe beispielsweise etwa dem Gehäuse eines USB-Sticks oder eines Mobiltelefons entsprechen kann.

Zwischen der Prozessoreinrichtung 2 und der Speichereinrichtung 3 bzw. der Schnittstelleneinrichtung 4 sind über Leitungen bzw. Leiterbahnen 9a bzw. 9b Kommunikationsverbindungen möglich. Weitere Leitungen bzw. Leiterbahnen 9c und 9d dienen der Verbindung des Schalters 7 bzw. der Anzeigeeinrichtung 6 mit der Prozessoreinrichtung 2. Die Anzeigeeinrichtung 6 ist so am Gehäuse 8 der Vorrichtung 1 angebracht, dass sie für einen Bediener deutlich sichtbar ist. Sie kann beispielsweise eine oder mehrere LEDs in verschiedenen Farben umfassen.

Der Schalter 7 verfügt über zwei unterschiedliche Schalterstellungen. Ein Bediener kann mit der Hand den Schalter 7 von einer Stellung zur anderen bewegen. In der Speichereinrichtung 3 sind - wie oben bereits erläutert zumindest nach dem erstmaligen Anschließen der Vorrichtung 1 an ein Kraftfahrzeug - zwei Datensätze bzw. Gesamtdatensätze abgespeichert, ein Datensatz mit den ursprünglichen Daten der Steuerungseinrichtungen desjenigen Kraftfahrzeugs, mit dem die Vorrichtung in diesem Moment verbunden ist, und ein zweiter Datensatz mit den Daten, die in die Steuerungseinrichtungen implementiert werden und damit die ursprünglichen Daten ersetzen sollen. Die Stellung des Schalters 7 bestimmt, welcher der beiden Datensätze von der Prozessoreinrichtung 2 an die Steuerungseinrichtungen des Kraftfahrzeugs gesendet und dort implementiert werden soll.

Das Steckverbindungselement 5 ist so ausgestaltet, dass es mit der Diagnoseschnittstelle des Kraftfahrzeugs, einer handelsüblichen OBD2-Buchse, in Steckverbindung gebracht werden kann. Die in Figur 1 dargestellte Prozessoreinrichtung 2 ist so ausgestaltet, dass die Übersetzungseinrichtung in der Weise in die Prozessoreinrichtung 2 integriert ist, dass die Prozessoreinrichtung 2 unmittelbar gemäß verschiedenen Kommunikationsprotokollen sendet. Mit anderen Worten ist die Übersetzungseinrichtung als integraler Bestandteil eines Prozessors ausgebildet und nicht als eine gegenüber einem Prozessor separate Komponente, die mit dem Prozessor z.B. durch Leitungen verbunden ist.

Die Speichereinrichtung 3 ist in dem in Figur 1 gezeigten Beispiel so ausgebildet, dass sie fest in die Vorrichtung 1 eingebaut ist.

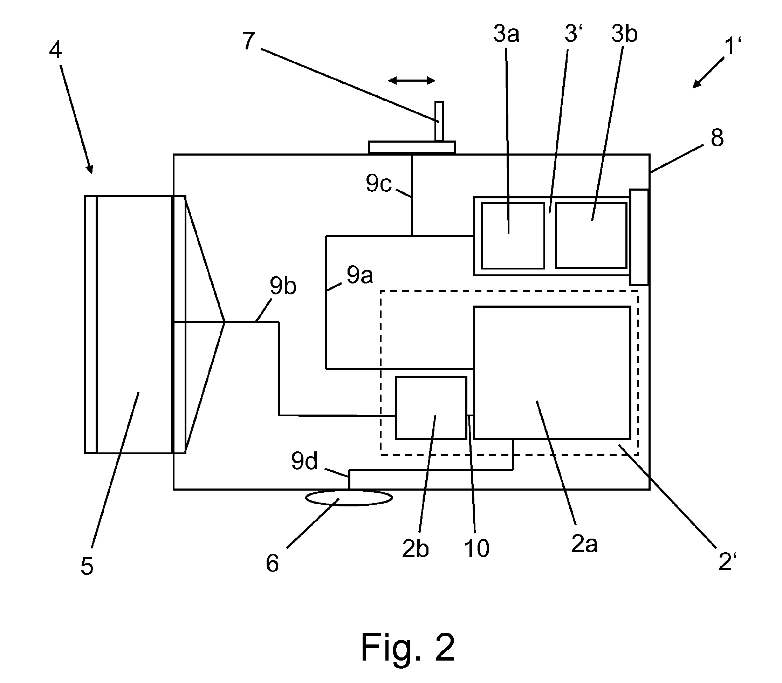

Figur 2 zeigt ein weiteres Ausführungsbeispiel der portablen Vorrichtung. Im Unterschied zu der in Figur 1 gezeigten Ausgestaltung umfasst die Prozessoreinrichtung 2' der Vorrichtung 1' der Figur 2 einen Hauptprozessor 2a und eine als separates Bauteil ausgebildete Übersetzungseinrichtung 2b, die mit dem Hauptprozessor 2a über eine Datenleitung 10 verbunden ist. Die Datenleitung 9a zwischen der Speichereinrichtung 3' und der Prozessoreinrichtung 2' ist dabei mit dem Hauptprozessor 2a verbunden, während die Datenleitung 9b zwischen der Schnittstelleneinrichtung 4 und der Prozessoreinrichtung 2' mit der Übersetzungseinrichtung 2b verbunden ist. Auf diese Weise kann in vorteilhafter Weise der Datenverkehr auf der Leitung 9b gemäß den durch die Übersetzungseinrichtung 2b übersetzten oder durch sie zu übersetzenden Kommunikationsprotokollen der Steuerungseinrichtungen des Fahrzeugs stattfinden, das an die Schnittstelleneinrichtung 4 angeschlossen ist, und der Datenverkehr auf der Leitung 10 zwischen der Übersetzungseinrichtung 2b und dem Hauptprozessor 2a kann gemäß einem einheitlichen Kommunikationsprotokoll des Hauptprozessors 2a stattfinden.

Des Weiteren unterscheidet sich das Ausführungsbeispiel gemäß Figur 2 von dem in Figur 1 dargestellten Ausführungsbeispiel dadurch, dass die Speichereinrichtung 3' zwei separate Speicherpartitionen umfasst. Die erste Speicherpartition 3a ist in einem nicht aus der Vorrichtung entfernbaren Speicherelement angeordnet. Dagegen ist die zweite Speicherpartition 3b in einem aus der Vorrichtung entfernbaren Speicherelement angeordnet und nach einem handelsüblichen mobilen Speicherformat gestaltet, zum Beispiel SD-Format, so dass das entfernbare Speicherelement von einem Bediener schnell und einfach mit externen Auslese- und Programmiervorrichtungen in Verbindung gebracht werden kann. Die entfernbare und die nicht entfernbare Speicherpartition sind untereinander und sowohl mit dem Hauptprozessor 2a als auch mit dem Schalter 7 mittels der beschriebenen Leitungen verbunden.

## Patentansprüche

1. Portable Vorrichtung zur Veränderung von Betriebsparameterwerten und/oder Firmware von elektronischen Steuerungseinrichtungen von Kraftfahrzeugen, in denen die elektronischen Steuerungseinrichtungen jeweils über einen Kommunikationsbus untereinander und mit einem Kommunikationsanschluss des Kommunikationsbusses verbunden sind, wobei die Vorrichtung aufweist:
eine elektronische Speichereinrichtung (3, 3'), die angepasst ist, um Firmwarekomponenten und/oder Betriebsparameterwerte für mindestens eine elektronische Steuerungseinrichtung eines Kraftfahrzeugs zu speichern,
eine Prozessoreinrichtung (2, 2'), die mit der Speichereinrichtung (3, 3') verbunden und angepasst ist, um Firmwarekomponenten und/oder Betriebsparameterwerte aus der Speichereinrichtung (3, 3') auszulesen,
eine mit der Prozessoreinrichtung (2, 2') verbundene Schnittstelleneinrichtung (4), die angepasst ist, um mit dem Kommunikationsanschluss des Kommunikationsbusses eines Kraftfahrzeuges lösbar so verbunden zu werden, dass ein Datenaustausch zwischen der Prozessoreinrichtung (2, 2') der Vorrichtung (1, 1') und den mit dem Kommunikationsbus verbundenen elektronischen Steuerungseinrichtungen des Kraftfahrzeuges über den Kommunikationsbus möglich ist, **dadurch gekennzeichnet, dass**
die Prozessoreinrichtung (2, 2') eine Übersetzungseinrichtung (2, 2b) aufweist, die eingerichtet ist, damit die Prozessoreinrichtung (2, 2') mit ihrer Hilfe Daten nach einer Vielzahl unterschiedlicher Kommunikationsprotokolle über die Schnittstelleneinrichtung (4) senden, empfangen und interpretieren kann, und
die Prozessoreinrichtung (2, 2') angepasst ist, um selbsttätig
- nach der lösbaren Verbindung der Schnittstelleneinrichtung (4) mit dem Kommunikationsanschluss des Kommunikationsbusses eines Kraftfahrzeugs eine Kommunikationsverbindung über den Kommunikationsbus herzustellen,
- eine Bestandsaufnahme der einzelnen an den Kommunikationsbus angeschlossenen elektronischen Steuerungseinrichtungen des Kraftfahrzeugs sowie der von den einzelnen elektronischen Steuerungseinrichtungen verwendeten Kommunikationsprotokolle durchzuführen und
- mit Hilfe der Übersetzungseinrichtung (2, 2b) für jede erkannte elektronische Steuerungseinrichtung, für die in der elektronischen Speichereinrichtung (3, 3') Firmwarekomponenten und/oder Betriebsparameterwerte gespeichert sind, über den Kommunikationsbus gemäß dem der elektronischen Steuerungseinrichtung entsprechenden Kommunikationsprotokoll Programmierbefehle und den jeweiligen Firmwarekomponenten und/oder Betriebsparameterwerten entsprechende Daten an die jeweilige elektronische Steuerungseinrichtung zu senden, wobei die Programmierbefehle und Daten angepasst sind, um die Firmwarekomponenten und/oder Betriebsparameterwerte in der jeweiligen Steuerungseinrichtung zu implementieren.

2. Portable Vorrichtung nach Anspruch 1, **dadurch gekennzeichnet, dass** die Firmwarekomponenten und/oder Betriebsparameterwerte in der Speichereinrichtung (3, 3') in einem einheitlichen, steuerungseinrichtungsunabhängigen Format gespeichert sind.

3. Portable Vorrichtung nach Anspruch 1 oder 2, **dadurch gekennzeichnet, dass** die Übersetzungseinrichtung (2) in der Weise in die Prozessoreinrichtung (2) integriert ist, dass die Prozessoreinrichtung (2) unmittelbar in den jeweiligen Kommunikationsprotokollen sendet und empfängt.

4. Portable Vorrichtung nach Anspruch 1 oder 2, **dadurch gekennzeichnet, dass** die Prozessoreinrichtung (2') einen Hauptprozessor (2a) und eine separate Übersetzungseinrichtung (2b) umfasst, wobei die Übersetzungseinrichtung (2b) zwischen dem Hauptprozessor (2a) und der Schnittstelleneinrichtung (4) vorgesehen ist und wobei Programmierbefehle und Daten, die von dem Hauptprozessor (2a) über die Schnittstelleneinrichtung (4) an eine bestimmte Steuerungseinrichtung gesendet werden, zunächst nach einem einheitlichen Kommunikationsprotokoll an die Übersetzungseinrichtung (2b) gesendet werden, dann von der Übersetzungseinrichtung (2b) in das Kommunikationsprotokoll der jeweiligen Steuerungseinrichtung übersetzt werden und schließlich in übersetzter Form an die Schnittstelleneinrichtung (4) weiter gesendet werden, und wobei von der jeweiligen Steuerungseinrichtung in ihrem Kommunikationsprotokoll über den Kommunikationsbus gesendete Daten von der Übersetzungseinrichtung (2b) in das einheitliche Kommunikationsprotokoll übersetzt und in diesem an den Hauptprozessor (2a) weitergeleitet werden.

5. Portable Vorrichtung nach einem der vorhergehenden Ansprüche, **dadurch gekennzeichnet, dass** die elektronische Speichereinrichtung (3') in einem aus der portablen Vorrichtung entfernbaren Speicherelement (3b) vorgesehen ist.

6. Portable Vorrichtung nach Anspruch 5, **dadurch gekennzeichnet, dass** sowohl in dem entfernbaren Speicherelement (3b) als auch in der Prozessoreinrichtung (2, 2') ein Schlüssel fest gespeichert ist und dass die Prozessoreinrichtung (2, 2') angepasst ist, um nur dann zu arbeiten, wenn die beiden Schlüssel zueinander passen.

7. Portable Vorrichtung nach einem der vorhergehenden Ansprüche, **dadurch gekennzeichnet, dass** die Schnittstelleneinrichtung (4) ein Steckverbindungselement (5) umfasst, das angepasst ist, um mit einem als komplementäres Steckverbindungselement ausgestalteten Kommunikationsanschluss des Kommunikationsbusses eines Kraftfahrzeuges durch Herstellung einer Steckverbindung verbunden werden zu können.

8. Portable Vorrichtung nach einem der vorhergehenden Ansprüche, **dadurch gekennzeichnet, dass** der Kommunikationsbus als K-Leitung, L-Leitung oder CAN-Bus ausgestaltet ist.

9. Portable Vorrichtung nach Anspruch 8, **dadurch gekennzeichnet, dass** die Prozessoreinrichtung (2, 2') angepasst ist, um nach Anschluss der Vorrichtung (1, 1') an den Kommunikationsanschluss eines bestimmten Kraftfahrzeugs festzustellen, ob die Vorrichtung (1, 1') bereits einmal an das Kraftfahrzeug angeschlossen war, und, wenn dies nicht der Fall war, vor der vorzunehmenden Änderung von Firmwarekomponenten und/oder Betriebsparameterwerten die Firmwarekomponenten und/oder Betriebsparameterwerte aus den Steuerungseinrichtungen auszulesen und als Sicherungskopie in der Speichereinrichtung (3, 3') zu speichern.

10. Portable Vorrichtung nach Anspruch 9, **dadurch gekennzeichnet, dass** die Vorrichtung (1, 1') einen mit der Prozessoreinrichtung (2, 2') in Verbindung stehenden, von einem Bediener betätigbaren Schalter (7) aufweist, der eine erste Schalterstellung und eine zweite Schalterstellung hat, wobei die Prozessoreinrichtung (2, 2') angepasst ist, um das Senden von Programmierbefehlen und Firmwarekomponenten und/oder Betriebsparameterwerten entsprechenden Daten an die Steuerungseinrichtungen zur Implementierung der Firmwarekomponenten und/oder Betriebsparameterwerte in den Steuerungseinrichtungen so durchzuführen, dass die Daten in der ersten Schalterstellung veränderten Firmwarekomponenten und/oder Betriebsparameterwerten entsprechen und, soweit eine Sicherungskopie für das jeweilige Fahrzeug in der Speichereinrichtung (3, 3') gespeichert ist, in der zweiten Schalterstellung den Firmwarekomponenten und/oder Betriebsparameterwerten der Sicherungskopie entsprechen.

11. Portable Vorrichtung nach einem der vorhergehenden Ansprüche, **dadurch gekennzeichnet, dass** in der Speichereinrichtung eine Nachschlagetabelle gespeichert ist, die für eine Vielzahl verschiedener Steuerungseinrichtungen jeweils einen Autorisierungsalgorithmus enthält, und dass die Prozessoreinrichtung angepasst ist, um in dem Fall, dass eine Steuerungseinrichtung vor dem Zulassen einer Implementierung veränderter Firmwarekomponenten und/oder Betriebsparameterwerte eine Autorisierung erfordert und über den Kommunikationsbus einen entsprechenden Autorisierungsanfragecode sendet, den Autorisierungsanfragecode zu empfangen, mit Hilfe der Nachschlagetabelle den der anfragenden Steuerungseinrichtung zugeordneten Autorisierungsalgorithmus zu bestimmen, mit Hilfe des Autorisierungsalgorithmus aus dem Autorisierungsanfragecode einen Autorisierungsantwortcode zu berechnen und den Autorisierungsantwortcode an die Steuerungseinrichtung zu senden.

12. Portable Vorrichtung nach einem der vorhergehenden Ansprüche, **dadurch gekennzeichnet, dass** die Prozessoreinrichtung (2, 2') eingerichtet ist, um
- unmittelbar nach Herstellung einer Verbindung zwischen der Schnittstelleneinrichtung (4) der Vorrichtung (1, 1') und dem Kommunikationsanschluss des Kommunikationsbus eines Kraftfahrzeuges selbsttätig eine für das Kraftfahrzeug charakteristische Kennung auszulesen, und
- nur dann zu arbeiten, wenn die ausgelesene Kennung mit einer in der Speichereinrichtung gespeicherten Kennung übereinstimmt.

13. Verfahren zur Veränderung von Betriebsparameterwerten und/oder Firmware von elektronischen Steuerungseinrichtungen von Kraftfahrzeugen, in denen die elektronischen Steuerungseinrichtungen über einen Kommunikationsbus untereinander und mit einem Kommunikationsanschluss verbunden sind, unter Verwendung einer Vorrichtung nach einem der vorhergehenden Ansprüche, wobei das Verfahren aufweist:
- Bereitstellen einer Vorrichtung (1, 1') nach einem der vorhergehenden Ansprüche,
- Speichern von Firmwarekomponenten und/oder Betriebsparameterwerten für mindestens eine elektronische Steuerungseinrichtung eines Kraftfahrzeugs in der Speichereinrichtung (3, 3') der Vorrichtung (1, 1') und
- lösbares Verbinden der Schnittstelleneinrichtung (4) der Vorrichtung (1, 1') mit dem Kommunikationsanschluss des Kommunikationsbusses eines Kraftfahrzeugs.

14. Verfahren nach Anspruch 13, bei dem das Speichern von Firmwarekomponenten und/oder Betriebsparameterwerten für mindestens eine elektronische Steuerungseinrichtung eines Kraftfahrzeugs in der Speichereinrichtung (3, 3') der Vorrichtung (1, 1') in der Weise erfolgt, dass zunächst für ein bestimmtes Kraftfahrzeug ermittelt wird, welche Steuerungseinrichtungen in dem Fahrzeug vorhanden sind, und anschließend Firmwarekomponenten und/oder Betriebsparameterwerte für mindestens eine der elektronischen Steuerungseinrichtungen des bestimmten Kraftfahrzeugs in der Speichereinrichtung (3, 3') der Vorrichtung (1, 1') gespeichert werden.

15. Verfahren nach Anspruch 13 oder Anspruch 14, bei dem das Speichern von Firmwarekomponenten und/oder Betriebsparameterwerten für mindestens eine elektronische Steuerungseinrichtung eines Kraftfahrzeugs in der Speichereinrichtung (3, 3') der Vorrichtung (1, 1') in der Weise erfolgt, dass Firmwarekomponenten und/oder Betriebsparameterwerte für eine Vielzahl verschiedener elektronischer Steuerungseinrichtungen von Kraftfahrzeugen in der Speichereinrichtung (3, 3') der Vorrichtung (1, 1') gespeichert werden.
